# EUROPEAN PATENT SPECIFICATION

(11) **EP 1 909 617 B1**
(45) Date of publication and mention of the grant of the patent: **30.05.2012**
(21) Application number: 06755775.1
(22) Date of filing: 17.07.2006
(51) Int. Cl.: A47C 19/00, A61G 7/065, A47C 21/08

(54) **BED ASSEMBLY**
BETTANORDNUNG
STRUCTURE DE LIT

(30) Priority: 20.07.2005 GB 0514926
(43) Date of publication of application: 16.04.2008
(60) Divisional application: 08105347.2
(73) Proprietor: Huntleigh Technology Limited, Bedfordshire LU1 1TD (GB)
(72) Inventor: HAYES, Stephen, Straits, Lower Gornal Dudley, West Midlands DY3 3AF (GB); HOLLYOAK, Stephen, Kingswinford West Midlands DY6 8SJ (GB)
(74) Representative: Thaker, Shalini
(86) International application number: PCT/GB2006/002624
(87) International publication number: WO 2007/010213

(56) References cited:
- EP-A- 0 381 293
- EP-A- 1 435 211
- EP-A2- 0 788 786
- DE-A1- 10 141 491
- FR-A- 2 711 520
- GB-A- 603 530
- GB-A- 1 134 417
- GB-A- 2 311 000
- US-A- 4 183 015
- US-A1- 2002 178 502
- US-A1- 2004 177 443
- US-B1- 6 486 792

## Description

The present invention relates to a bed assembly, to a mattress support and to an input element for a bed control unit.

Modem hospital beds are generally designed to be configurable into a variety of profiles. Typically, they are provided with a plurality of sections which can be rotated to change a patient's position on the bed. For example, they are usually provided with a back rest section which can pivot from a substantially flat position to a raised sitting position, with a thigh rest section which can be pivoted from a substantially flat position to a knee raised position, and with leg rest section coupled to the thigh rest section and able to be raised with the thigh rest section while keeping the feet in a lower position or in a raised position.

Beds having such functions are well known in the art (see EP 1435 211 A) and generally work satisfactorily. However, there are concerns in the operation of such beds, relating particularly to the fact that when one of the bed portions rotates upwardly relative to an adjacent bed section there is a compression effect on the patient, which can be particularly unpleasant. Furthermore, such beds can cause discomfort to any patient kept on the bed for prolonged periods, at worst leading to the onset of bed sores and other ailments.

Many of these types of hospital bed are electrically operated for convenience of hospital staff and patients. For this purpose, there is provided a key pad coupled to the bed control unit which includes a plurality of function keys such as a bed raise key, a bed lower key, bed tilt keys, keys for raising and lowering the back rest, thigh rest and leg rest sections, as well as keys for setting the bed into predefined configurations. Typically, there are now provided two key pads, one for use by hospital staff and the other for use by the patient. It is known to locate the patient's key pad on a patient retention panel at the side of the bed, which mitigates the inconvenience of a movable key pad, which can become misplaced. Such bed-fitted keypads do, however, have their disadvantages, notably that there is not an area of existing patient retention panels which provides a truly comfortable location for a patient and that operation of the key pad can be difficult as a result of flexing of the panel as the keys are pressed.

The present invention seeks to provide an improved bed assembly, mattress support and bed control unit.

According to an aspect of the present invention, there is provided a substantially rigid mattress support for a bed as claimed in claim 1.

It has been found that a curved back rest support improves patient comfort. It is understood the reason for this is that the traditional mattress support, being flat, generates particular pressure points at the patient's areas of greatest pressure, that is the protruding parts of a patient's body. A mattress, although being resilient, can only partially mitigate this disadvantage. A curved back rest support conforms more closely with the curves of a patient's back so is able to provide more even support. Furthermore, it has been discovered that a curved back rest of this nature provides a greater contact area, thereby spreading the pressure of a patient's weight more evenly and reducing high pressure areas which can lead to the development of bed sores and other ailments.

With a curved back rest section, the mattress support can be arranged such that the lowermost part of the back rest section, that is its central portion, moves away from the seat section as it pivots upwardly. This has an important advantage as during such a motion, which raises the patient to a sitting position, the patient's rear tends to lengthen as a result of stretching. Thus, the action of moving the lowermost part of the back rest section away from the seat section effectively increases the length of the mattress support to accommodate the stretching of the patient. As the mattress placed on the mattress support is typically resilient, the mattress can accommodate this lengthening effect.

The provision of a curved seat section, and thigh rest section, augments the amount by which the lowermost part of the back rest section moves away from the seat or thigh rest section and hence the amount of lengthening of the mattress support.

Advantageously, the sections of the mattress support are removable, for washing and the like.

In the preferred embodiment, the portions of the mattress support are formed from blow moulded plastics material. This provides sections which are light but rigid and thus easily handled by hospital staff when removed from a bed, for example for cleaning.

Embodiments of the present invention are disclosed below, by way of example only, with reference to the accompanying drawings, in which:
Figure 1 shows a left-side perspective view from above of a preferred embodiment of a bed assembly provided without a mattress support member;
Figure 2 shows the bed assembly of Figure 1 with the preferred embodiment of mattress support member thereon;
Figure 3 shows in plan view and in schematic form two mattress support sections of the bed of Figure 1;
Figure 4 is a right-side perspective view from above of the bed assembly of Figures 1 and 2;
Figure 5 is an enlarged view of a part of the bed assembly of Figure 3; and
Figure 6 shows a keypad zone of the bed of Figure 1 in use by a patient.

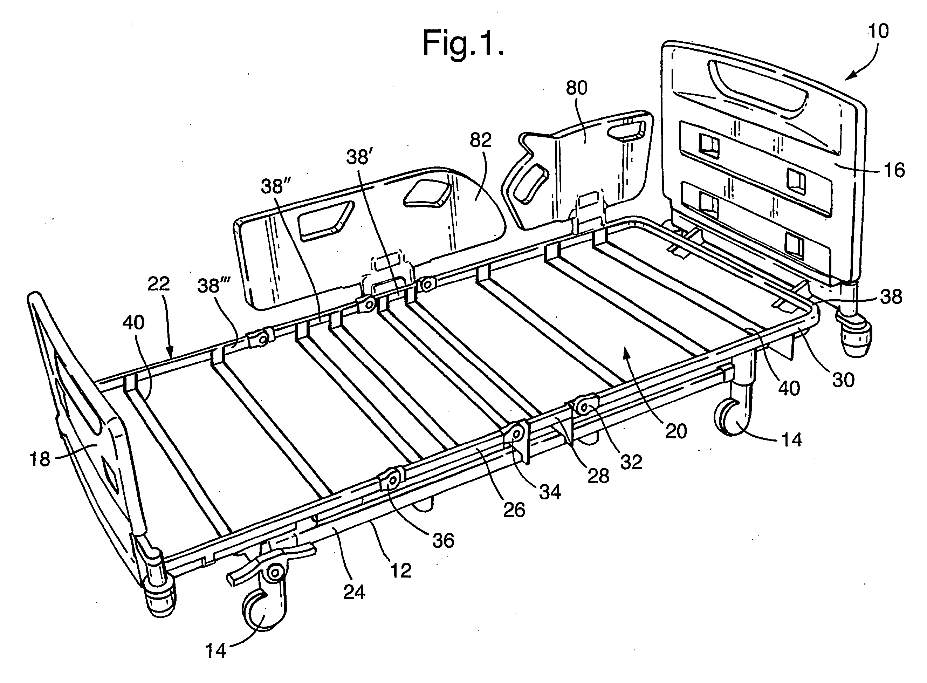

Referring to Figure 1, there is shown a preferred embodiment of bed assembly 10 which includes a wheeled base 12 provided with four castors 14, a headboard 16 and footboard 18, all of conventional type. Coupled to the base 12 is a bed platform 20 which can be raised and lowered relative to the base 12 and tilted by means of one or more electrical actuators (not shown), also of conventional type.

The platform 20 is provided with a frame 22 formed, in this embodiment, of four frame sections 24, 26, 28 and 30 which are coupled to one another by means of hinged joints 32, 34 and 36.

Each frame section 24-30 is provided with an upper frame member having substantially vertical inner side walls 38, 38', 38", 38"' and a plurality of depending transverse struts 40 to form a recessed support surface for supporting a plurality of mattress support panels, described in further detail below.

The hinges 32, 34 and 36 and provided in the upper frame members 24-30 and enable the frame members to pivot relative to one another about the hinges 32-36.

The frame 22 is typically made of metal or a metal alloy.

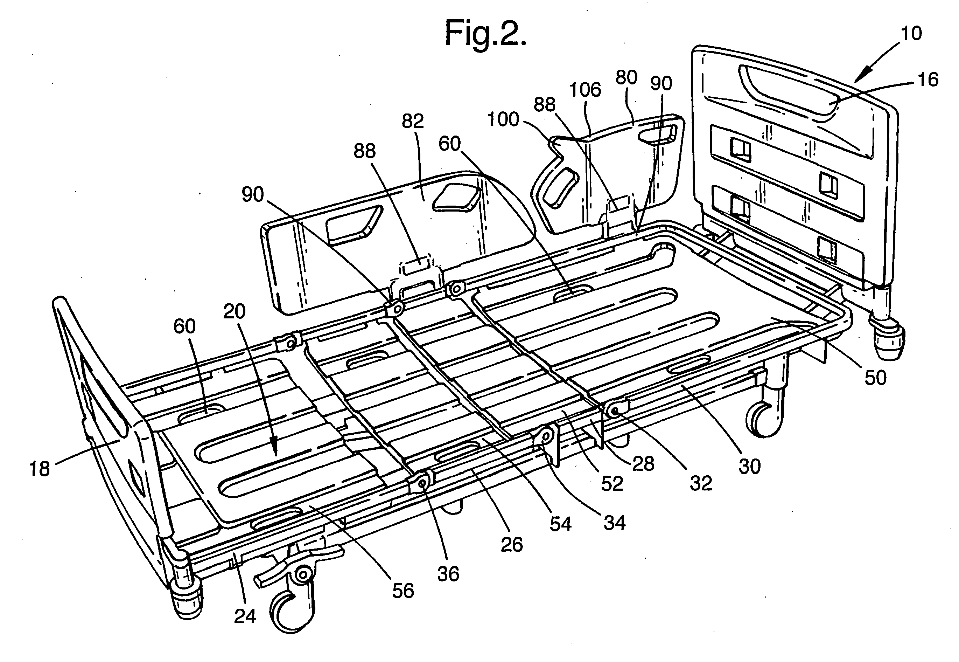

Referring now to Figure 2, located on the transverse members 40 of the frame 22, there are provided, in this embodiment, four mattress support panels 50, 52, 54 and 56. These panels 50-56, together with the pivoting frame members 24-30, form the backrest section, seat section, thigh rest section and leg rest section typically found in conformable beds of this nature. They allow the bed to be reconfigured from the lying position shown in the Figures to a sitting position in which the backrest section 30,50 is pivoted upwardly about the hinge 32 and in which, when desired, the thigh rest section 26,54 is also pivoted upwardly about hinge 34 to raise the hinge 36 (which typically is at the knee break). The leg rest section 24,56 can either be left to slope downwardly towards the foot rest 18 or raised (pivoted upwardly about hinge 36) to be substantially horizontal to bring the patient's feet up and substantially level with the patient's knees. Typically, the seat section 28,52 remains in a lowermost position.

One or more actuators are provided to pivot the various sections of the bed as desired and these are well known in the art, as is their control system, so will not be described in further detail herein.

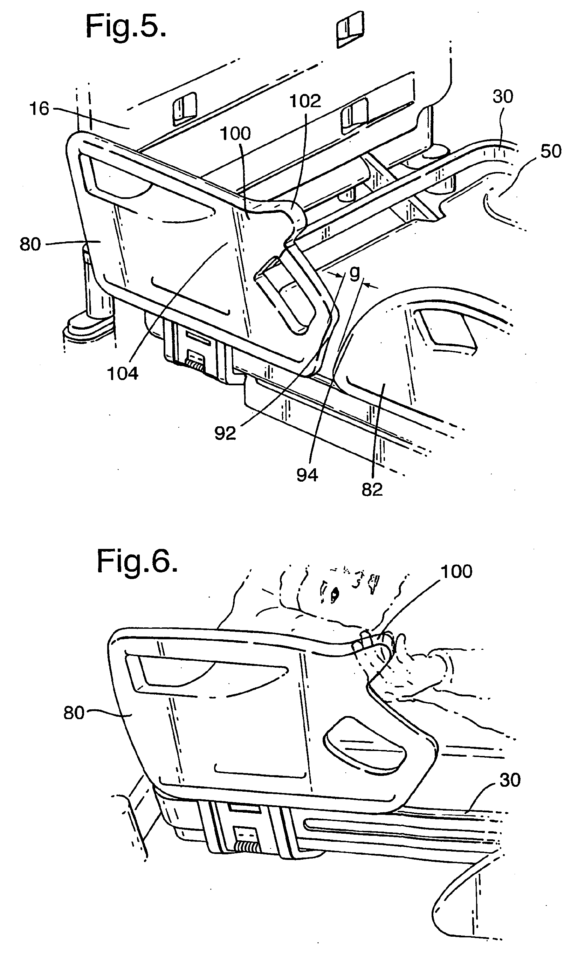

As can be seen in Figure 2, the mattress support panels 50-56 are curved so as to present a concave upper surface when looking down on the bed platform 20. The panels 50-56 lie below the frame walls 38-38"', preferably by a distance sufficient to allow a mattress placed on the panels 50-56 to fit within the frame 22 so as to be held by the substantially vertical side walls 38-38"' of the frame 22. That distance may be around the height of a conventional mattress for such beds but is preferably less than this so that the upper surface of the mattress extends above the frame 22, to hold the patient comfortably above the hard surfaces of the frame 22 (as shown in Figure 6).

It can be seen that the hinges 32-36 are built into the upper frame members 24-30 so as to present substantially smooth outer surfaces in order to prevent any discomfort or injury.

At least some of the mattress support panels 50-56 are preferably removable and advantageously made of blow mouldings from any suitable plastics material. The panels 50-56 are rigid.

Cut-outs 60 in the panels 50-56 provide handles for easy removal of the panels 50-56 from the bed 10 and for their manipulation. There are preferably also provided snap fittings on the underside surfaces of the panels 50-56 which snap onto the transverse struts 40 to retain the panels in place. In the preferred embodiment, each snap fitting is formed from two bosses extending beyond the lower surfaces of the panels 50-56, the bosses having facing curved surfaces which form a snap fit gripper member which snaps on to one of the struts 40.

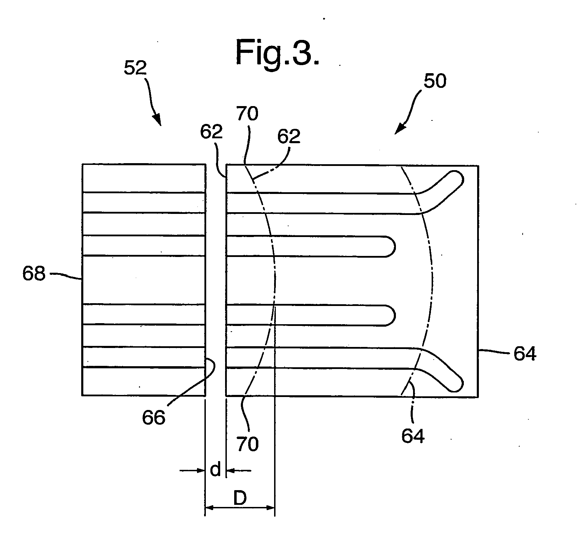

Referring now to Figure 3, there is shown in plan view in schematic form the arrangement of the mattress support panels 50,52 of the bed of Figure 2. The support panel 50, which forms the back rest section of the bed 10, includes a first end wall 62 and an opposing end wall 64. The mattress support panel 52, which forms the seat portion of the bed 10, includes a first end wall 66 and a second end wall 68. The walls 62 and 66 are adj acent one another, as shown in the Figure.

When the bed is in a flat position, depicted by the solid lines in Figure 3, the spacing between the two panels 50,52 is shown as distance *d*, which can be any suitable distance which will not adversely affect the support of a patient on a mattress laid over the panels 50-56. The distance *d* will typically be a few centimetres, often around 10 cm or so.

On the other hand, when the support panel 50 is pivoted to a raised patient sitting position, the distance between the end walls 62,66 of the panels 50,52 respectively increases to the distance *D* shown in Figure 3. It can be seen that distance *D* is considerably larger than the distance *d* when the two panels are lying flat.

There are two factors which cause the increase in the distance between the two end walls 62,66. The first is the curvature of the panels 50,52 and the fact that the pivoting point is at the sides of the panel. The centre of the panels 50,52 are substantially below the sides, thereby causing this increase in distance during the pivoting motion. The second factor is that the pivot 32 is raised above even the highest points of the panels 50,52 (that is above their raised sides) which causes additional movement away from the panel 52 including at the ends 70.

This increase in spacing is advantageous because when a person moves from a lying position to a sitting position the person stretches at the point of bending (that is between the patient's back and lower thighs). Thus, this arrangement follows the extension of the person and therefore makes it much more comfortable to a patient. Prior art beds, which have the pivot points substantially at the level of the mattress support sections and which have mattress support sections which are substantially flat, do not benefit from this increase in spacing between the sections and therefore from any increase in the effective length of the mattress support base.

The reader will appreciate that the two factors mentioned above could be provided independently of one another, although with reduced lengthening effect.

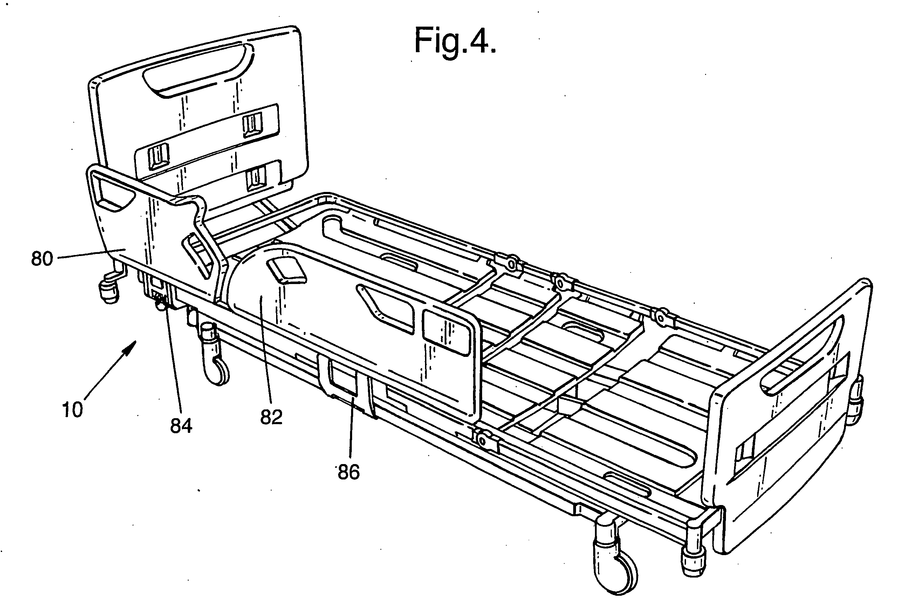

Referring now to Figure 4, the bed 10 is shown from the other side, in order better to see the patient retention panels 80,82 for retaining the patient on the bed. In this example, the side of the bed without retention panels is intended to be placed against a wall and thus such panels are not required. Of course, for a bed which is intended to be placed away from a wall, patient retention panels 80,82 may be provided on both sides of the bed.

The panels 80,82 are typically made from a plastics material or from metal covered with a plastics cladding.

The patient retention panel 80 is coupled to the frame member 30 forming the back rest section of the bed 10 and is able to move therewith. The patient retention panel 82 is coupled to the seat section 28 of the frame 22 and in practice does not move as the seat section 28, in this embodiment, is the one stationary member of the frame 22 (although it does, of course, move with the frame 22 as this is raised, lowered and tilted).

The patient retention panels 80,82 are fixed on suitable brackets 84,86 which can be latched in an upper position as shown in the Figures and which can be unlatched to allow the patient retention panels 80,82 to be swung downwards and to adopt a lower position in which their upper surfaces are substantially aligned with the frame 22.

The swinging action typically keeps the patient retention panels 80,82 in their same orientation. For this purpose, the brackets 84,86 include double axles 88,90 (best seen in Figure 2) which allow the panels 80,82 to swing initially outwardly and then through an arc of a circle to their lowermost position. The nature of the brackets 84,86 is well known in the art and therefore is not described in any further detail herein.

As is best appreciated from Figure 5, when the back rest section 30,50 is pivoted upwardly towards a patient sitting position, the patient retention panel 80 will move over the retention panel 82. For this purpose, the panel 80 includes a concave facing surface 92 which faces a convex surface 94 of the retention panel 82. As the panel 80 moves upwardly and around the panel 82, the surface 92 slides over the surface 94 retaining substantially the same gap g between the two surfaces 92 and 94. As a result of this, the combination of the two panels 80,82 provides a substantially continuous support surface throughout the movement of the retention panel 80, without creating between the two panels any constriction which could trap part of a patient's body or that of hospital staff

As shown in particular in Figures 5 and 6, there can be seen in schematic form an example of a preferred embodiment of unit 100 for supporting a keypad (not shown) which allows the patient to operate the various functions of the bed 10.

In this embodiment, the keypad unit 100 is provided with a protruding member 102 which extends beyond the general outer perimeter of the patient support panel 80 and in a direction towards the foot end of the bed 10. The unit 100 is fitted to the patient retention panel 80 so as to move with that panel upon movement of the back rest section 30,50, in such a manner that it maintains its position relative to the backrest section 30,50 and hence relative to a patient lying on the bed 10. The unit 100 is located so as to be easily accessible by a patient on the bed by means of the patient's hand at that side of the bed, as shown in particular in Figure 6. The position of the unit 100 could be described as being approximately at the shoulder area of a patient lying or sitting on the bed 10.

As can also be seen in Figure 6, the shape and structure of the unit 10 is such that a patient is able to place his/her fingers on the outer side of the unit 100 and then to operate a keypad (not shown) on the inner/patient side of the unit 100. The patient is therefore able to apply an opposing pressure at the rear side of the unit 100 to the pressure applied when pressing the buttons of the key pad, which in practice stabilises the unit 100. This feature contrasts with the existing keypads provided on the patient support panels, which tend to be difficult to operate because the panels generally have some flexibility to them.

The keypad which would be provided in the unit 100 is of a type equivalent to the keypads already used in such beds and therefore is not described in any further detail herein.

Referring in particular to Figures 2 and 5, it is preferred that the unit 100 is fitted to the patient support panel 80 by first and second flanges 104,106 which can be secured to the panel 80 either by suitable snap fit connections and/or by one or more screws. Within the unit 100 there is provided a plug or socket which fits to a complimentary socket/plug to make the necessary electrical connections between the keypad of the unit 100 and the control system of the bed 10.

The preferred structure of the keypad unit 100 facilitates the assembly of the unit 100 to the bed 10 and also enables its easy replacement in case the keypad is in some way damaged during use or shipping.

## Claims

1. A mattress support formed of a plurality of substantially rigid mattress support sections which are movable relative to one another, including a backrest section, a thigh rest section and a leg rest section **characterised in that** the back rest section, thigh rest section and leg rest section are curved in the transverse direction of the mattress support to present a concave upper surface when looking down onto the support, the concave upper surface conforming closely with the curves of a patient lying thereon, the sections being removable for cleaning.

2. A mattress support according to claim 1, **characterised in that** the section or sections of the mattress support are formed from blow moulded plastics material.

3. A mattress support as claimed in claim 2 **characterised in that** the sections have cut outs that provide handles for removal of the sections.

4. A mattress support as claimed in any preceding claim **characterised in that** the underside of the sections have snap fittings to fit onto a bed frame.

## Patentansprüche

1. Matratzenträger mit einer Anzahl von im Wesentlichen starren Matratzenträgerabschnitten, die relativ zueinander bewegbar sind, einschließlich eines Rückenlehnenabschnittes, eines Oberschenkelauflageabschnittes und eines Beinauflageabschnittes, **dadurch gekennzeichnet, dass** der Rückenlehnenabschnitt, der Oberschenkelauflageabschnitt und der Beinauflageabschnitt in Querrichtung des Matratzenträgers gekrümmt sind, um, bei Ansicht nach unten auf den Träger, eine konkave obere Fläche zu bilden, wobei die konkave obere Fläche eng den Rundungen eines Patienten, der darauf liegt, entspricht, wobei die Abschnitte zum Reinigen entfernbar sind.

2. Matratzenträger nach Anspruch 1, **dadurch gekennzeichnet, dass** der Abschnitt oder die Abschnitte des Matratzenträgers aus blasgeformtem Kunststoffmaterial gebildet sind.

3. Matratzenträger nach Anspruch 2, **dadurch gekennzeichnet, dass** die Abschnitte Ausschnitte aufweisen, die Handgriffe zum Entfernen der Abschnitte bilden.

4. Matratzenträger nach einem der vorstehenden Ansprüche, **dadurch gekennzeichnet, dass** die Unterseite der Abschnitte Schnappverbindungen zum Anbringen an einem Bettgestell aufweisen.

## Revendications

1. Support de matelas constitué d'une pluralité de sections de support de matelas sensiblement rigides qui sont mobiles les unes par rapport aux autres, comprenant une section repose-dos, une section repose-cuisses et une section repose-jambes, **caractérisé en ce que** la section repose-dos, la section repose-cuisses et la section repose-jambes sont incurvées dans la direction transversale du support de matelas afin de présenter une surface supérieure concave lorsqu'on regarde le support depuis le dessus, la surface supérieure concave épousant étroitement les courbes d'un patient se couchant dessus, les sections étant amovibles pour nettoyage.

2. Support de matelas selon la revendication 1, **caractérisé en ce que** la section ou les sections du support de matelas sont formées à partir de matière plastique moulée par soufflage.

3. Support de matelas selon la revendication 2, **caractérisé en ce que** les sections comportent des découpes qui forment des poignées pour enlever les sections.

4. Support de matelas selon l'une quelconque des revendications précédentes, **caractérisé en ce que** le dessous des sections comporte des parties à encliquetage qui s'encliquettent sur un cadre de lit.
